# EUROPEAN PATENT APPLICATION

(11) **EP 2 636 385 A1**
(43) Date of publication of application: **11.09.2013**
(21) Application number: 11838006.2
(22) Date of filing: 01.11.2011
(51) Int. Cl.: A61C 8/00

(54) **TIGHTENING DEVICE FOR DENTAL IMPLANTS**

(30) Priority: 02.11.2010 JP 2010246541
(71) Applicant: Kyoto Tool Co., Ltd., Kyoto-shi Kyoto 612-8393 (JP)
(72) Inventor: TAKAHASHI, Yukihisa, Yokohama-shi Kanagawa 224-0011 (JP); SAKANE, Tohru, Kyoto-shi Kyoto 612-8393 (JP); MATSUMOTO, Yoshiharu, Kyoto-shi Kyoto 606-8114 (JP); KANEKO, Katsuya, Yokohama-shi Kanagawa 223-0057 (JP)
(74) Representative: Beresford, Keith Denis Lewis
(86) International application number: PCT/JP2011/075146
(87) International publication number: WO 2012/060356

(57) **Abstract**

An object of the invention is to provide a tightening apparatus for a dental implant capable of reducing the occurrence of slip phenomenon in a manual operation. The tightening apparatus includes a torque wrench (W) and a slip detection device (D). The torque wrench (W) includes a tightening part, a wrench body having a head (21) provided with the tightening part (10) and a handle (22), and a load cell (30) for detecting tightening torques. The slip detection device (D) includes a slip determiner (52) and a buzzer (93). The slip determiner (52) is adapted to sample an amount of change of the tightening torques in every predetermined time t, to sequentially compare the amount of change of the tightening torques in a prior predetermined period t with the amount of change of the tightening torque in a subsequent predetermined period t that is immediately after the prior predetermined period t, and to determine whether or not the latter amount of change is smaller than the former amount of change. The buzzer (93) notifies the tightening state is on the verge of slip phenomenon when the slip determiner (52) determines that the latter amount of change is smaller than the former amount of change.

## Description

### Technical Field

The invention relates to tightening apparatuses for dental implants that each include a fixture and an abutment to be screwed to the fixture.

### Background Art

Dental implant surgeries include a primary surgery of embedding a fixture in a bone in a patient's mouth and a secondary surgery of screwing an abutment to the fixture embedded in the mouth. In the secondary surgery, a doctor screws an abutment to the fixture at a predetermined tightening torque value by operating a plate-type torque wrench while operating a free end of a bent rod of an indicator of the torque wrench and adjusting the free end to the predetermined tightening torque value indicated on a scale (see Patent Literature 1). That is, the abutment is screwed to the fixture at the same tightening torque value for all patients. Tightening torque values are generally designated by implant manufacturers.

### Citation List

### Patent Literature

Patent Literature 1: JP 08-182691 A

### Summary of Invention

### Technical Problem

However, qualities and densities of bones in the mouths to embed fixtures vary from patient to patient. If the abutment is screwed to the fixture at the same tightening torque value for any given patient as described above, the abutment may be overtightened on the fixture for some patients. At worst, this may cause a slip phenomenon such as separation of the fixture from the bone, requiring an additional surgery. Further, the doctor visually checks in the mouth of the patient whether or not the free end of the bent rod matches the tightening torque value on the scale, so that he may misread the scale depending on the angle. This may induce a slip phenomenon.

Misreading of the scale may be avoided by using a preset-type torque wrench capable of pesetting tightening torque values. However, there is no difference between preset-type torque wrenches and plate-type torque wrenches in that the abutment is screwed to the fixture at the same tightening torque value for all patients. Therefore, also in preset-type torque wrenches, the abutment may be overtightened on the fixture for some patients.

The invention is conceived in view of the above circumstances, and its object is to provide a tightening apparatus for a dental implant capable of reducing the occurrence of slip phenomenon in a manual operation.

### Solution to Problem

A tightening apparatus for a dental implant according to the invention is an apparatus for screwing an abutment in a fixture. To solve the above-mentioned problems, this tightening apparatus includes a torque wrench and a slip detection device. The torque wrench includes a tightening part engageable with the abutment; a wrench body, the wrench body including a head, provided with the tightening part, and a manually-operable handle; and a tightening torque detector for detecting tightening torques generated when the abutment is screwed to the fixture. The slip detection device includes a slip determiner and an indicator. The slip determiner is adapted to sample an amount or rate of change of the tightening torques detected by the torque detector in every predetermined time t, to sequentially compare the amount or rate of change of the tightening torques in a prior predetermined period t with that in a subsequent predetermined period t that is immediately after the prior predetermined period t, and to determine whether or not the latter amount or rate is smaller than the former amount or rate. The indicator is adapted to indicate that the abutment is tightened on the fixture on the verge of a slip phenomenon when the slip determiner determines that the latter amount or rate of change is smaller than the former amount or rate of change.

In a tightening operation of engaging the tightening part of the torque wrench with the abutment and manually operating the handle of the wrench body to screw the abutment to the fixture, when the abutment rotates with respect to the fixture and its resistance increases, there is a great amount or rate of change of the tightening torque (the former amount or rate of change) in the predetermined period t. On the contrary, when the abutment is screwed with respect to the fixture and its resistance changes to a lesser degree, there is a little amount or rate of change of the tightening torque (the latter amount or rate of change) in the predetermined period t. The inventors invented the above-described tightening apparatus focusing on the point that the latter change occurs immediately after the former change. The tightening apparatus is configured such that the slip determiner samples the amount or rate of change of the tightening torques in every predetermined time t, and when the slip determiner determines that the latter amount or rate of change is smaller than the former amount or rate of change, the indicator notifies a doctor of the tightening status on the verge of a slip phenomenon. Consequently, the doctor can stop tightening of the abutment to the fixture at a limit torque value immediately before the slip phenomenon for each patient, making it possible to reducing the occurrence of the slip phenomenon.

The slip detection device may further include an input part adapted to input thereto an inherent information item of a particular patient; a memory adapted to store therein a plurality of tightening torque reference values corresponding to inherent information items of patients; a torque computer adapted to retrieve from the memory one of the tightening torque reference values corresponding to the inherent information item of the particular patient, the information item being inputted through the input part, and to compute the tightening torques based on the corresponding tightening torque reference value and an output signal from the torque detector.

This aspect of the invention can provide an appropriate tightening torque for each patient in the tightening operation because the torque computer computes tightening torques based on one of the torque reference values corresponding to the inherent information item of a particular patient and the output signal from the torque detector. It is therefore possible to improve the accuracy of the tightening operation for each patient.

The indicator may be configured to indicate that the abutment is tightened on the fixture on the verge of a slip phenomenon when the slip determiner determines a predetermined number of times that said latter amount or rate of change is smaller than said former amount or rate of change. The tightening operation needs to be performed a plurality of times until the abutment is screwed to the fixture. Even in the tightening operations other than the last one, the slip determiner samples the amount or rate of change of the tightening torques in every predetermined time t, and if the slip determiner determines that the latter amount or rate of change is smaller than the former amount or rate of change, the indicator is activated. This is a false annunciation. However, in the above-mentioned aspect of the invention, when the slip determiner determines the predetermined number of times that the latter amount or rate of change is smaller than the former amount or rate of change, the indicator announces that the tightening state is on the verge of the slip phenomenon, so that it is possible to reduce false annunciations. Even when the indicator issues false annunciations, the doctor can recognize them as false annunciations by the feel and empirical rule.

It is possible to use a load cell as the torque detector. The load cell may be adapted to convert a load, which is applied to the tightening part when the abutment is screwed to the fixture, into an electrical signal and to output the converted electrical signal.

It is possible to use a display device as the indicator. The display device may be adapted to perform at least one of graphical display and numerical display. The graphical display may display a torque curve representing a change of the tightening torques detected by the torque detector. The numerical display may numerically display the tightening torques detected by the torque detector. Alternatively, it is possible to use at least one of a buzzer and a light-emitting device as the indicator. The indicator may understandably be any combination selected from the display device, the buzzer, and the light-emitting device.

It is preferable that the tightening part be attachable to and removable from the head of the wrench body. In this aspect of the invention, as the tightening part is removably attached to the head, the tightening part may be made exchangeable by preparing plural types of tightening parts corresponding to plural types of abutments. In other words, the tightening apparatus may be adapted to tighten plural types of abutments merely by exchanging the tightening part.

Another tightening apparatus for a dental implant of the invention has a slip determiner and an indicator of different configurations from those of the slip determiner and the indicator described above. More particularly, the slip determiner is adapted to sample an amount or rate of change of tightening torques detected by the torque detector in every predetermined time t, to determine whether or not the amount or rate of change of tightening torques in the predetermined time t falls within a predetermined range. The indicator is adapted to indicate that the abutment is tightened on the fixture on the verge of a slip phenomenon when the slip determiner determines that the amount or rate of change in the predetermined time t falls within the predetermined range.

In this aspect of the invention, when the slip determiner samples the amount of change or the rate of change of the tightening torques in every predetermined time t and determines that the amount of change or the rate of change of the tightening torque value in the predetermined time t falls within the predetermined range, the indicator notifies the doctor that the tightening state is on the verge of a slip phenomenon. Therefore, the doctor can stop tightening the abutment on the fixture at the limit torque value for the particular patient immediately before the occurrence of the slip phenomenon, thereby reducing the occurrence of the slip phenomenon.

The torque wrench may further include a torque transfer part including a first end and a second end on the opposite side of the first end, the first end being provided inside the wrench body and engaged with the tightening part. The torque detector may include a load cell abutting the second end of the torque transfer part, the load cell being adapted to receive a load applied to the tightening part through the torque transfer part, to convert the load into an electrical signal, and to output the converted electrical signal.

In this aspect of the invention, the first end of the torque transfer part engages with the tightening part, and the second end of the torque transfer part abuts the load cell. Accordingly, the load applied to the tightening part in the tightening operation is transmitted to the load cell through the torque transfer part, and the load cell converts the load into an electrical signal and outputs the converted electrical signal. The electrical signal from the load cell serves as the basis for obtaining the load (tightening torque) applied to the tightening part in the tightening operation. Consequently, it is possible to perform the tightening operation appropriately by referring to the tightening torques.

The load cell may include a convex loading part. The second end of the torque transfer part may be provided with a recess to receive the loading part of the load cell. The height of the loading part may be larger than a depth of the recess. In this aspect of the invention, the convex loading part of the load cell is received in the recess of the torque transfer part to abut with the second end of the torque transfer part. Therefore, the load applied to the tightening part in the tightening operation can be transmitted with greater accuracy through the torque transfer part to the loading part of the load cell.

Alternatively, the load cell may include a concave loading part. The second end of the torque transfer part may be provided with a protrusion to be received in the loading part of the load cell. The height of the protrusion may be larger than a depth of the loading part. In this aspect of the invention, the protrusion of the torque transfer part is received in and in abutment with the concave loading part of the load cell. Therefore, the load applied to the tightening part in the tightening operation can be transmitted with greater accuracy through the torque transfer part to the loading part of the load cell.

The wrench body may include a distal portion and a rear portion. The distal portion may include the head. The second end of the torque transfer part may protrude from the rear portion of the wrench body. The load cell may be disposed rearwardly of the wrench body and may abut the second end. In this aspect of the invention, the load cell provided rearwardly of the wrench body contributes to the minimization of the wrench body.

The tightening part may include an outer peripheral surface provided with a ratchet groove. The torque transfer part may further include a pawl provided at the first end thereof, the pawl being engageable with the ratchet groove. In this aspect of the invention, the pawl is pressed onto a wall of the ratchet groove, thereby transmitting a rotating torque of the tightening part to the torque transfer part.

The torque wrench may further include a sleeve attached to the load cell to fit around the wrench body in a movable manner along the length direction; and a first biasing part provided between a first abut-stop of the wrench body and the sleeve. In this case, the tightening part may be rotatable with respect to the head. The torque transfer part may be accommodated in the wrench body in a movable manner along the length direction.

The ratchet groove may include first and second walls. The pawl may include an abut-stop surface adapted to abut the first wall and restrict rotation of the tightening part in a first direction; and an inclined surface adapted to press the second wall to move the wrench body to a distal side thereof.

In this aspect of the invention, the abut-stop surface of the pawl abuts the first wall to restrict rotation of the tightening part in the first direction. In the tightening operation, the abut-stop surface of the pawl is pressed by the first wall, and the rotating torque of the tightening part is transmitted to the torque transfer part. When the inclined surface of the pawl is pressed by the second wall, the wrench body is moved to the distal side. As a result, the pawl is disengaged from the ratchet groove, allowing rotation of the tightening part with respect to the head in a second direction opposite to the first direction.

Alternatively, the ratchet groove may include first and second walls. The first wall may include an abut-stop surface abutting the pawl for restricting rotation of the tightening part in a first direction. The second wall may include an inclined surface to be pressed by the pawl to move the wrench body to a distal side thereof.

In this aspect of the invention, the pawl abuts the abut-stop surface of the first wall to restrict rotation of the tightening part in the first direction. In the tightening operation, the abut-stop surface of the first wall presses the pawl to transmit the rotating torque of the tightening part to the torque transfer part. When the inclined surface of the second wall is pressed by the pawl, the wrench body is moved to the distal side. As a result, the pawl is removed from the ratchet groove, allowing rotation of the tightening part with respect to the head in the second direction opposite to the first direction.

The torque transfer part may further include a second abut-stop. The torque wrench may further include a third abut-stop and a second biasing part provided between the second and third abut-stops. In this aspect of the invention, the biasing force of the second biasing part biases the torque transfer part to the distal side.

The load cell may further include a protective wall standing around the loading part, the protective wall having a larger height than the loading part. In this aspect of the invention, the loading part is surrounded by the protective wall having a larger height than the loading part. This arrangement can reduce the possibility of the loading part contacting other members and taking an unnecessary load.

The slip detection device may further include a torque computer for computing the tightening torque of the tightening part based on an output signal from the load cell of the torque wrench.

### Brief Description of Drawings

Fig. 1 is a block diagram of a tightening apparatus for a dental implant in accordance with a first embodiment of the invention.
Fig. 2A is a schematic plan view, including a partial cross sectional view, of a torque wrench of the tightening apparatus.
Fig. 2B is a schematic front view showing the torque wrench with a removed tightening part, an abutment, and a fixture.
Fig. 2C is a schematic diagram showing relationship between the tightening part of the torque wrench and a load button of a load cell.
Fig. 3 is a schematic front view of an operating panel of a slip detection device of the tightening apparatus.
Fig. 4 is a flow chart processed by a microprocessor unit of the slip detection device.
Fig. 5 is a characteristic diagram showing time-axis change of tightening torques in a tightening operation by the tightening apparatus.
Fig. 6 is a block diagram of a tightening apparatus for a dental implant in accordance with a second embodiment of the invention.
Fig. 7A is a schematic plan view, including a partial cross sectional view, of a torque wrench of the tightening apparatus.
Fig. 7B is a schematic front view showing the torque wrench with a removed tightening part, an abutment, and a fixture.
Fig. 7C is a schematic diagram showing relationship between the tightening part of the torque wrench and a first end of a torque transfer part.
Fig. 8 is a schematic exploded plan view, including a partial cross sectional view, of the torque wrench.

### Description of Embodiments

First and second embodiments of the invention will be described below.

### First Embodiment

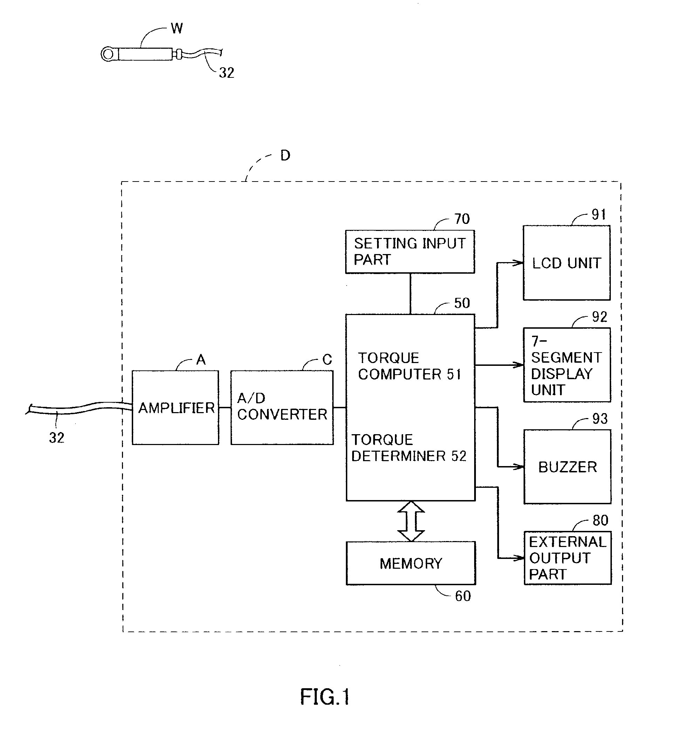

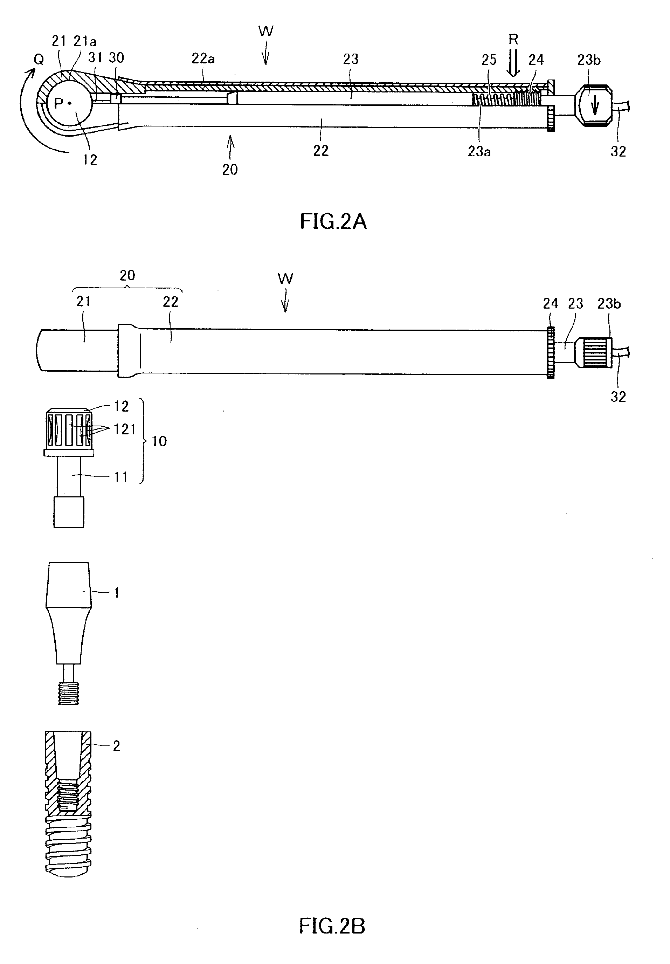

First, a tightening apparatus in accordance with the first embodiment of the invention will be described with reference to Fig. 1 to Fig. 5. The tightening apparatus shown in Fig. 1, Fig. 2A and Fig. 2B is a tightening apparatus for a dental implant including a fixture 2 and an abutment 1 to be screwed to the fixture 2. The tightening apparatus includes a torque wrench W and a slip detection device D. The torque wrench W and the slip detection device D will be described in detail below. As described herein the term "slip phenomenon" means a phenomenon that the fixture 2 comes off from a bone (not shown) in a patient's mouth and the fixture 2 rotates idle on the bone.

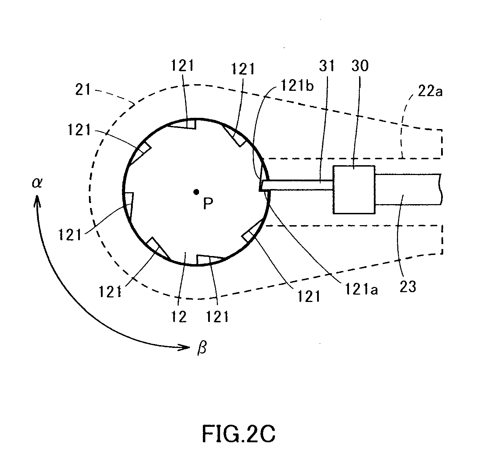

As shown in Fig. 2A and Fig. 2B, the torque wrench W includes a tightening part 10, a wrench main unit 20, and a load cell 30 (torque detector). The tightening part 10 includes an engaging portion 11 and an attachable portion 12. The engaging portion 11 is engageable with the abutment 1. The shape of the engaging portion 11 may be modified appropriately according to an engaged portion of the abutment 1. In the first embodiment, since the engaged portion (not shown) of the abutment 1 is a protrusion of hexagonal prism shape, the engaging portion 11 has a hexagonal recess to fittingly receive the protrusion. The attachable portion 12 is a circular cylinder contiguous with the engaging portion 11. As shown in Fig. 2B and Fig. 2C, a plurality of ratchet grooves 121 is provided at intervals in a circumferential direction α along the outer peripheral surface of the attachable portion 12. The ratchet grooves 121 each include an abut-stop surface 121a and an inclined surface 121b. The abut-stop surface 121a extends perpendicular to a rotational axis P of the attachable portion 12, and the inclined surface 121b gradually increases the outer diameter of the attachable portion 12 in a circumferential direction P of the attachable portion 12.

As shown in Fig. 2A and Fig. 2B, the wrench main unit 20 includes a wrench body, a rod 23, a fixed part 24, and a coil spring 25. The wrench body includes a handle 22 and a head 21 connected to a distal portion of the handle 22. The head 21 has a cylindrical attachment hole 21 a passing through the head 21 in the thickness direction thereof. The outer diameter of the attachment hole 21 a is slightly larger than the outer diameter of the attachable portion 12 of the tightening part 10. That is, the attachable portion 12 of the tightening part 10 removably fits in the attachment hole 21a. The attachable portion 12 as fitted is rotatable with respect to the head 21, i.e. about the rotational axis P in the circumferential directions α, β.

As shown in Fig. 2A, the handle 22 is an elongated tuboid body. The handle 22 has the above-mentioned distal portion and a manually-operable rear portion. The handle 22 has a housing hole 22a that extends in the length direction and communicates with the attachment hole 21 a. The housing hole 22a of the handle 22 houses the rod 23. A thread groove is formed in the inner peripheral surface of the rear portion of the housing hole 22a of the handle 22. The fixed part 24 is screwed to the rear portion of the housing hole 22a of the handle 22. The fixed part 24 is a tuboid body having a thread groove in its outer peripheral surface. The rod 23 is longer than the handle 22, and it includes a distal portion, a rear portion, and a small-diameter portion 23a provided between the distal portion and the rear portion. The small-diameter portion 23a is smaller in outer diameter than the distal portion and the rear portion. The rear portion of the rod 23 extends through the fixed part 24 and protrudes from the handle 22. The rear portion of the handle 22 is provided with a knob 23b. The coil spring 25 winds concentrically to fit around the small-diameter portion 23a of the rod 23, disposed in a compressed state between a step around the small-diameter portion 23a of the rod 23 and the fixed part 24. In other words, the coil spring 25 is housed, together with the rod 23, in the housing hole 22a of the handle 22 and biases the rod 23 toward the head 21.

The load cell 30 is provided at the distal portion of the rod 23 and housed, together with the rod 23, in the housing hole 22a of the handle 22. The load cell 30, a compressive load cell, includes a load button 31 and a power/output cable 32. The load button 31 extends in the length direction of the handle 22 and has a distal portion of wedge shape as shown in Fig. 2C. The coil spring 25 biases the rod 23 to push the distal portion of the load button 31 out of the housing hole 22a of the handle 22 into the attachment hole 21a of the head 21, so that the distal portion of the load button 31 engages with one of the ratchet grooves 121 of the attachable portion 12 of the tightening part 10, in contact with the abut-stop surface 121a of the same ratchet groove 121. This arrangement restricts rotation of the attachable portion 12 with respect to the head 21 in the circumferential direction β. When a manual force R is applied to the handle 22, a load of the tightening part 10 is exerted on the load button 31. When the load button 31 receives the load, an electrical resistance value of a strain gauge in the load cell 30 changes, and the load cell 30 outputs the change in the resistance value as an electrical signal to the slip detection device D through the power/output cable 32. The load cell 30 receives power from the slip detection device D through the power/output cable 32. When the attachable portion 12 rotates with respect to the head 21 in the circumferential direction α, the distal portion of the load button 31 moves along the inclined surface 121b of the ratchet groove 121 of the attachable portion 12, disengages from the ratchet grooves 121, and gets received in the next ratchet grooves 121. These steps are repeated (that is, the distal portion of the load button 31 enters and leaves one after another of the ratchet grooves 121 of the attachable portion 12), thereby allowing the attachable portion 12 to rotate with respect to the head 21 in the circumferential direction α. The tightening part 10 may be attached from the lower side and also from the upper side as shown in Fig. 2B. It is possible to reverse the directions restricting and allowing rotation of the tightening part 10 by attaching the tightening part 10 to the head 21 from the upper side in the figure (i.e. from the opposite direction).

The slip detection device D includes an amplifier A, an A/D converter C, a microprocessor unit 50, a memory 60, a setting input part 70 (input part), an external output part 80, a LCD (liquid crystal display) unit 91, a 7-segment display unit 92, and a buzzer 93 (indicator). The amplifier A, connected with the power/output cable 32 of the load cell 30, amplifies electrical signals from the load cell 30 and outputs the amplified signals to the A/D converter C. The A/D converter C converts the amplified analogue electrical signals to digital and outputs the converted signals to the microprocessor unit 50.

The setting input part 70 is adapted for input on personal information items of patients, power-ON/OFF, and other settings and adapted to output the input data to the microprocessor unit 50. The personal information items may be sex, age, bone density, and/or others. The memory 60 prestores a plurality of tightening torque reference values corresponding to respective items of the personal information. The memory 60 is a nonvolatile memory interconnected to a bus line of the microprocessor unit 50. The tightening torque reference values are optimum tightening torques for the sex, age, bone density, etc.

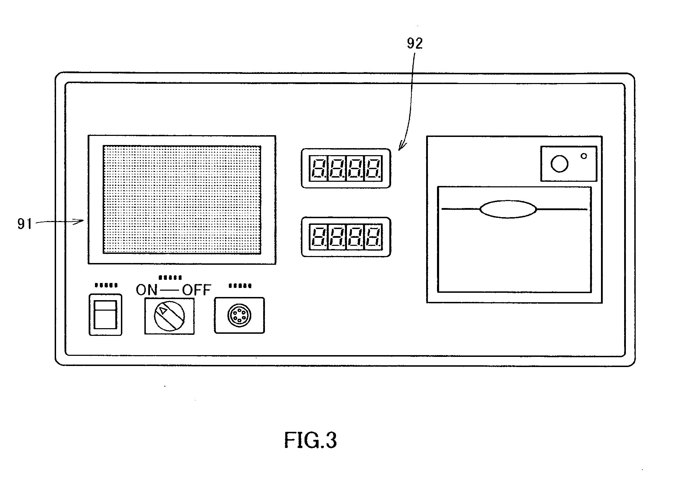

The microprocessor unit 50 has input ports, output ports, and an internal memory. The input ports of the microprocessor unit 50 are connected to the A/D converter C, the setting input part 70, etc. The output ports of the microprocessor unit 50 are connected to the external output part 80, the LCD unit 91, the 7-segment display unit 92, the buzzer 93, etc. The internal memory of the microprocessor unit 50 stores a slip determination program (to be described). The microprocessor unit 50 sequentially processes the slip determination program, thereby performing functions as a torque computer 51 and a slip determiner 52. The LCD unit 91 has a liquid crystal display in the operating panel shown in Fig. 3 to display changes in tightening torque as a torque curve on a time-series basis. The 7-segment display unit 92 has 7-segment displays in the operating panel to numerically display real values and hold values of tightening torques.

The following describes how to use and operate the tightening apparatus configured as described above. It should be noted that it is assumed in the first embodiment for convenience of description that the tightening operation needs to be performed three times to screw the abutment 1 to the fixture 2.

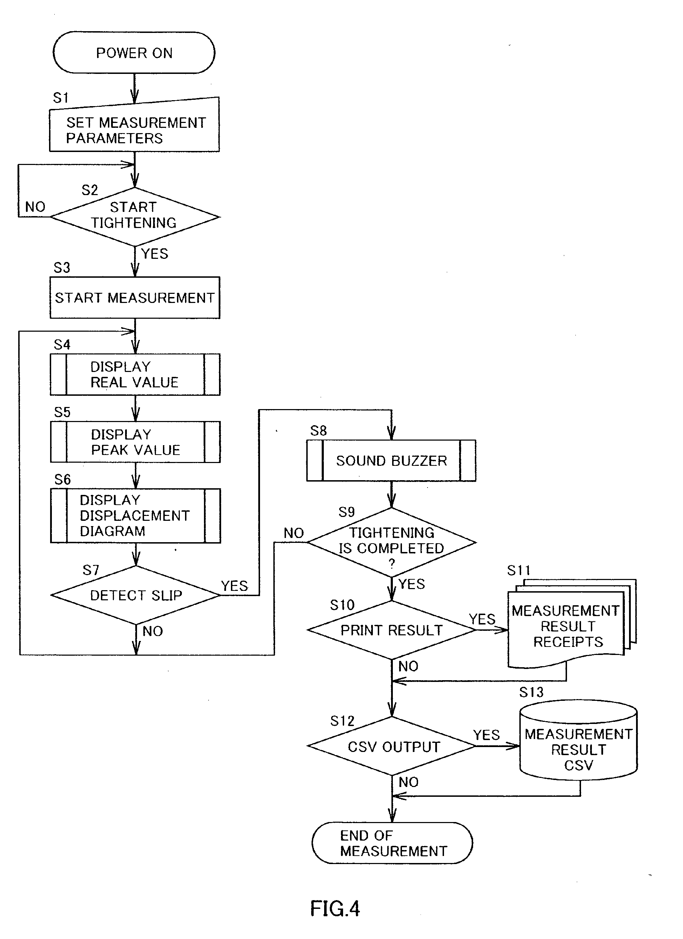

First, when a doctor operates the setting input part 70 to turn on power, power voltage is supplied to the microprocessor unit 50 etc. to activate the slip detection device D, and the power voltage is also supplied to the load cell 30 through the power/output cable 32 to activate the load cell 30. The microprocessor unit 50 then starts processing the slip determination program shown in Fig. 4. After that, when the doctor operates the setting input part 70 to input a personal information item or items of a particular patient (s1), the microprocessor unit 50 retrieves from the memory 60 one of the torque reference values corresponding to the personal information item or items and stores the value in the internal memory.

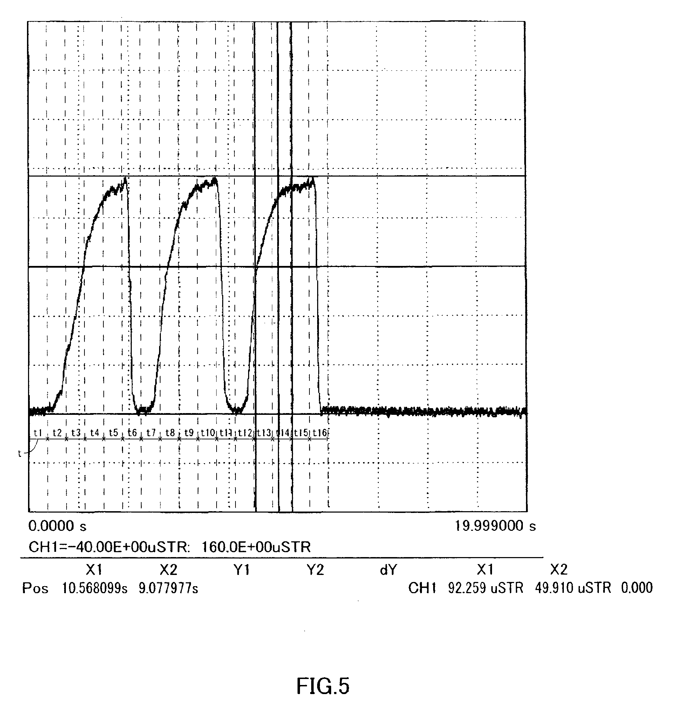

After that, the doctor engages the abutment 1 with the tightening part 10 of the torque wrench W, engages the abutment 1 in this state with the fixture 2, and applies manual force R to the handle 22 of the torque wrench W to start the tightening operation. The distal portion of the load button 31 of the load cell 30 comes into contact with the abut-stop surface 121a of one of the ratchet grooves 121 of the tightening part 10, so that the tightening part 10 rotates together with the abutment 1 in the circumferential direction α, causing the abutment 1 to be tightened on the fixture 2 and gradually increasing the resistance force against the tightening force. That is, the resistance forces generated against the tightening force R in tightening the abutment 1 produce moment (torque) Q to rotate the tightening part 10 along the head 21. The moment of the tightening part 10 applies a load to the load cell 30 receives through the load button 31. The load cell 30 converts the load into an electrical signal, the amplifier A amplifies the electrical signal, and the A/D converter C converts the amplified signal from analog to digital form. When the microprocessor unit 50 receives the A/D converted electrical signals (s2), it makes predetermined operations based on the electrical signal and the tightening torque reference value to compute tightening torques (s3), records the tightening torques on the memory 60, and outputs the real values and the peak value of the tightening torques to the 7-segment display unit 92 and the tightening torques to the LCD unit 91, respectively. The real and peak values of the tightening torques are thus displayed numerically on the 7-segment display unit 92 (s4, s5), and, as shown in Fig. 5, the changes of the tightening torques are displayed graphically as torque curves on the LCD unit 91 (s6).

In the meantime, the microprocessor unit 50 samples the amount of change of the tightening torques every predetermined period t (t1 to tn) and sequentially compares the amount of change (increase) of the tightening torques in a prior predetermined period t with that in the subsequent predetermined period t to determine whether or not the latter amount of change is smaller than the former amount of change (s7). In this determination, when it is determined that the latter amount of change is smaller than the former amount of change, the microprocessor unit 50 sounds the buzzer 93 (s8). In the first embodiment, as shown in Fig. 5, the amount of change of the tightening torques in the period t5 is smaller than that in the period t4, the amount of change of the tightening torque in the period t10 is smaller than that in the period t9, and the amount of change of the tightening torque in the period t14 is smaller than that in the period t13.

In each of the periods t4, t9, and t14, the abutment 1 rotates with respect to the fixture 2 and its resistance (resistance force) increases, so that the torque curve surges (there is a large amount of change in the tightening torque). On the contrary, in each of the periods t5 and t10 (at the ends of the first and second tightening operations), the abutment 1 hardly rotates with respect to the fixture 2, so that there is only a small change in the resistance (resistance force) of the abutment 1 against the fixture 2, and the torque curve generally hovers horizontally (there is a small amount of change in the tightening torque). Also in the period t14 (just before the end of the third tightening operation), the abutment 1 is already screwed to the fixture 2 and hardly rotates, and there is only a small change in the resistance (resistance force) of the abutment 1 against the fixture 2, so the torque curve generally hovers horizontally (there is a small amount of change in the tightening torque). The microprocessor unit 50 detects the decreased amount of change of the tightening torque in the period t14 compared to the amount of change in the period t13, sounds the buzzer 93 to inform the doctor immediately before the occurrence of the slip phenomenon. The buzzer 93 sounds also at the ends of the first and second tightening operations (periods t5 and t10) because the amount of change of the tightening torque in the periods t5, t10 is smaller than that in the periods t4, t9, respectively. However, as the doctor knows by the feel and based on his experience that a slip phenomenon has not occurred, he ignores the buzzer 93 and continues to perform the tightening operation. Then, when the buzzer 93 sounds three times, the doctor recognizes the sound as a slip alert.

After that, the doctor operates the setting input part 70 to input the completion of the tightening operations (s9), leading to a printing operation (s10), the microprocessor unit 50 retrieves the tightening torques stored in the memory 60 and outputs them to a printer through the external output part 93 to provide printouts (s11). After that, the operates the setting input part 70 for an output in CSV form (s12), the microprocessor unit 50 retrieves the tightening torques stored in the memory 60 and outputs them in CSV format to recording means, e.g. a USB memory, through the external output part 93 (s13). The output data of the tightening torques may be provided in CSV format or any other data format. The tightening torques may not be outputted to the recording means such as the USB but may be outputted to various electronic appliances such as a PC and an electronic medical record system.

In the above-described tightening apparatus, the microprocessor unit 50 (slip determiner 52) detects that the amount of change of the tightening torque in the prior predetermined period t is smaller than that in the subsequent predetermined period t, thereby detecting for the particular patient that the abutment 1 is tightened on the fixture 2 on the verge of occurrence of a slip phenomenon. It is therefore possible to screw the abutment 1 to the fixture 2 at the limit torque value for the particular patient immediately before the occurrence of the slip phenomenon, thereby reducing the occurrence of the slip phenomenon. Moreover, the microprocessor unit 50 (torque computer 51) performs the predetermined computations based on the tightening torque reference value corresponding to the personal information item or items of each particular patient and the electrical signal from the load cell 30 to obtain the tightening torques. It is therefore possible to obtain a tightening torque suitable for each patient in the tightening operation. Consequently, it is possible to improve the accuracy of the tightening operation for each patient.

### Second Embodiment

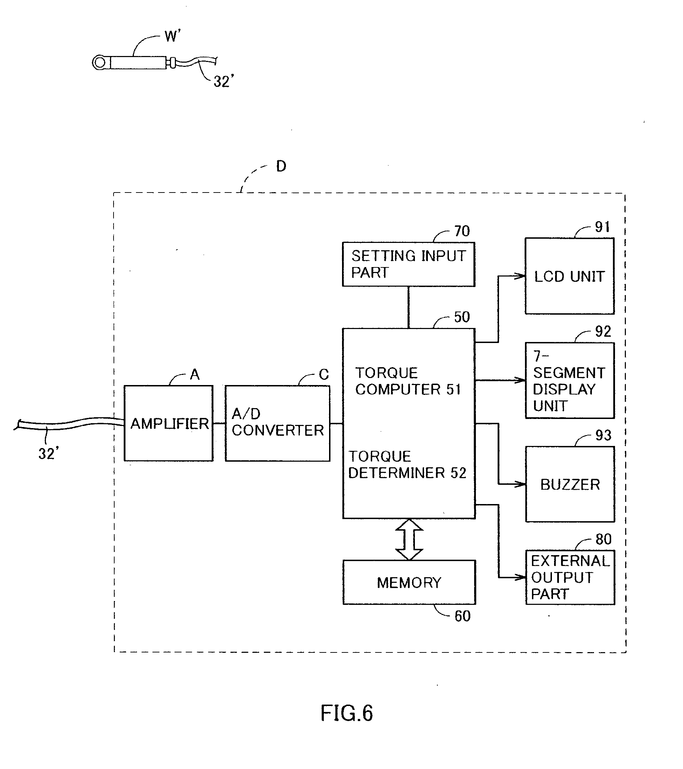

Next, a tightening apparatus in accordance with the second embodiment of the invention will be described with reference to Fig. 6 to Fig. 8. The tightening apparatus shown in Fig. 6 has the same configuration as the tightening apparatus of the first embodiment, except that the torque wrench W' has a different configuration from the torque wrench W of the first embodiment. Only the differences will be described below in detail, and overlapping descriptions are omitted. A symbol _'_ is added to the present torque wrench for the sake of distinction from the torque wrench W of the first embodiment.

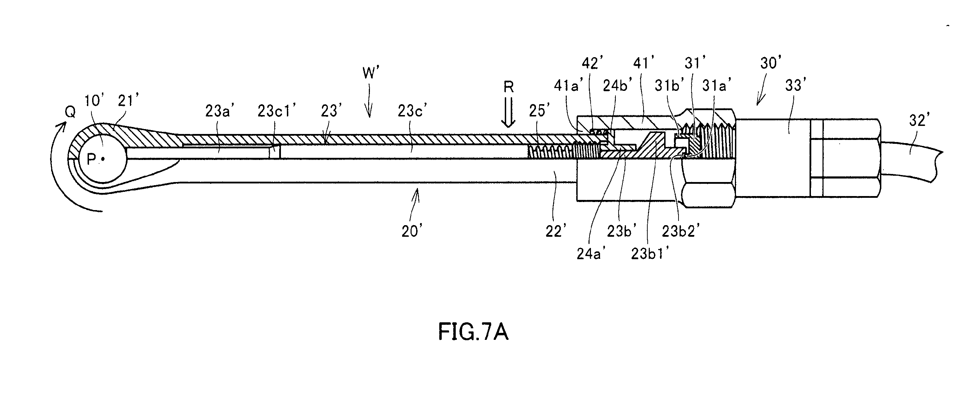

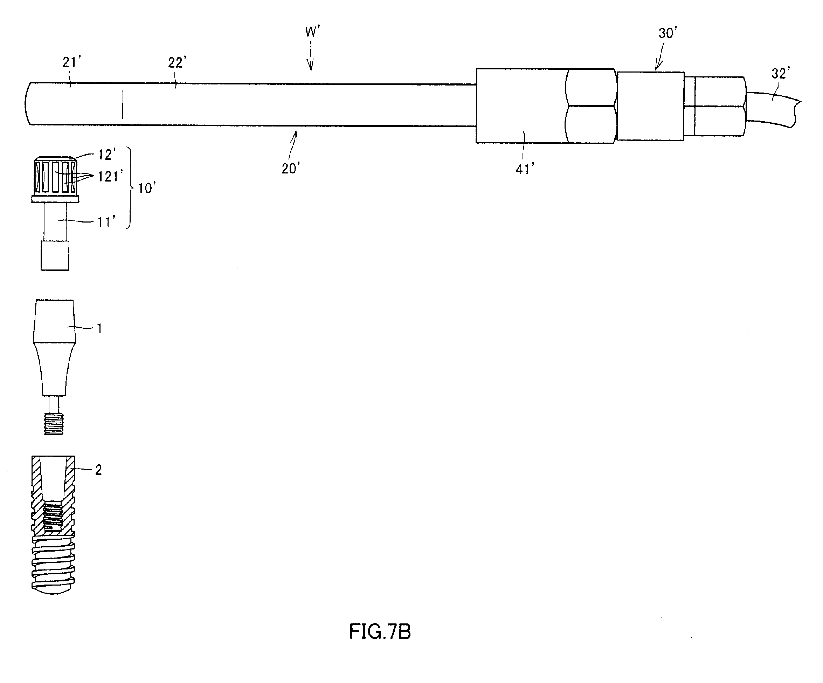

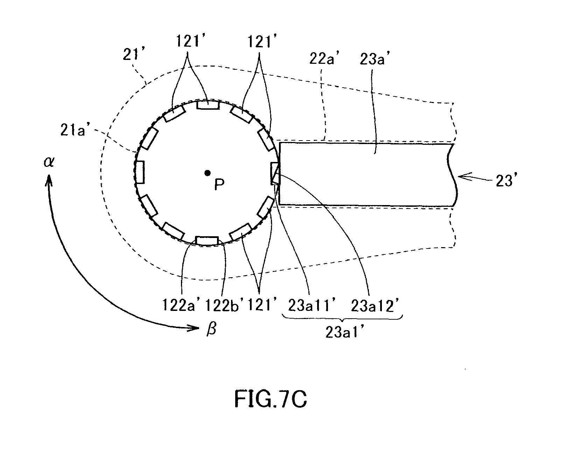

As shown in Fig. 7A to Fig. 7C, the torque wrench W' includes a tightening part 10', a wrench main unit 20', a load cell 30' (torque detector), a sleeve 41', and a coil spring 42' (first biasing part). As shown in Fig. 7B and Fig. 7C, the tightening part 10' has the same configuration as the tightening part 10, except that ratchet grooves 121' provided along the outer peripheral surface of an attachable portion 12' are different in shape from t the ratchet grooves 121 of the first embodiment. The ratchet grooves 121' are arcuate recesses as shown in Fig. 7B. The ratchet grooves 121' each have a first wall 122a' on the side of the circumferential direction α and a second wall 122b' on the side of the circumferential direction β.

As shown in Fig. 7A and Fig. 7B, the wrench main unit 20' includes a wrench body, a torque transfer part 23', a fixed part 24', and a coil spring 25' (second biasing part). The wrench body includes a head 21' and a handle 22' of substantially the same configuration as the head 21 and the handle 22 of the wrench body of the first embodiment. The head 21' corresponds to the distal portion of the wrench body, and a rear portion of the handle 22' corresponds to the rear portion of the wrench body.

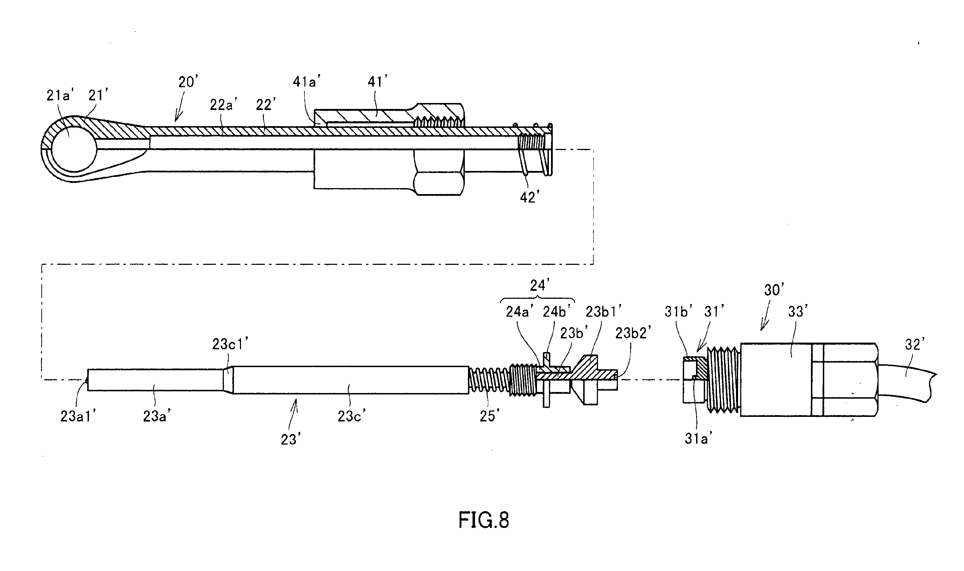

As shown in Fig. 8, the torque transfer part 23' is a rod extending in the length direction of the wrench body, and it is accommodated in a housing hole 22a' of the wrench body in such a manner as to be movable in the length direction. The torque transfer part 23' has a larger length than the housing hole 22a'. The torque transfer part 23' has a first end 23a', a second end 23b', and a middle portion 23c' provided between the first end 23a' and the second end 23b'. The middle portion 23c' is a circular cylinder having a smaller outer diameter than the housing hole 22a'. First and second cut portions 23c1' are provided (only one is shown) in upper and lower ends, respectively, on the side of the first end 23a' of the middle portion 23c'. The first end 23a' is a circular cylinder having a smaller outer diameter than the middle portion 23c'. The first end 23a' and the middle portion 23c' are accommodated in the housing hole 22a'. As shown in Fig. 7C, a distal portion of the first end 23a' is provided with a triangular pawl 23a1'. The pawl 23a1' includes an abut-stop surface 23a11' and an inclined surface 23a12'. The first cut portion 23c1' fittingly receives a first protrusion (not shown) on an upper inner wall of the housing hole 22a' of the wrench body, and the second cut portion 23c1' fittingly receives a second protrusion (not shown) on a lower inner wall of the housing hole 22a' of the wrench body. It is thus possible to maintain the state as shown in Fig. 7C where the abut-stop surface 23a11' of the pawl 23a1' faces in the circumferential direction α and the inclined surface 23a12' faces in the circumferential direction β.

The pawl 23a1' protrudes from the housing hole 22a' of the handle 22' into the attachment hole 21 a' of the head 21' and engages with one of the ratchet grooves 121' of the attachable portion 12' of the tightening part 10'. With the pawl 23a1' engaged with the ratchet groove 121', the abut-stop surface 23a11' of the pawl 23a1' is in contact with the first wall 122a' of the particular ratchet grooves 121'. This arrangement restricts rotation of the attachable portion 12' with respect to the head 21' in the circumferential direction β (first direction). When the wrench main unit 20 is operated in the circumferential direction α in the tightening operation as described below, the first wall 122a' of the ratchet groove 121' presses the abut-stop surface 23a11' of the pawl 23a1'. The torque transfer part 23' accordingly attempts to move toward the load cell 30' (but does not actually move), applying a load to a loading part 31a' (to be described) of the load cell 30'. The rotating torque of the tightening part 10' is thus transferred through the torque transfer part 23' to the load cell 30'.

The tightening part 10' is allowed to rotate with respect to the head 21' in the circumferential direction α (second direction). Specifically, when the tightening part 10' rotates with respect to the head 21' in the circumferential direction α with the sleeve 41' attached to the load cell 30' as described below, the second wall 122b' of the ratchet groove 121' of the tightening part 10' presses the inclined surface 23a12' of the pawl 23al'. The wrench body thereby moves to the distal side against the biasing forces of the coil spring 42' and the coil spring 25', and the pawl 23a1' disengages from the ratchet groove 121'. The disengaged pawl 23a1' is then received in the next ratchet groove 121', and the coil spring 42' and the coil spring 25' biases the wrench body to the rear side. These steps are repeated (that is, the pawl 23a1' of the torque transfer part 23' enters and leaves one after another of the ratchet grooves 121' of the tightening part 10'), thereby allowing rotation of the tightening part 10' with respect to the head 21' in the circumferential direction α.

The tightening part 10' may be attached from the lower side and also from the upper side as shown in Fig. 7B. It is possible to reverse the directions restricting and allowing rotation of the tightening part 10' by attaching the tightening part 10' to the head 21' from the upper side in the figure (i.e. from the opposite direction). In this case, the second and first protrusions of the housing hole 22a' of the wrench body fit into the first and second cut portions 23c1', respectively, of the torque transfer part 23'. As a result, the abut-stop surface 23a11' of the pawl 23a1' faces in the circumferential direction β, and the inclined surface 23a12' faces in the circumferential direction α.

As shown in Fig. 7A and Fig. 8, the second end 23b' is a circular cylinder having a smaller outer diameter than the first end 23a' and than the middle portion 23c'. The second end 23b' includes a threaded portion (not shown). The threaded portion is screwed into a threaded hole (not shown) of the middle portion 23c'. The second end 23b' includes a distal portion accommodated in the housing hole 22a' of the handle 22' and a rear portion protruding rearward from the housing hole 22a' (i.e. from the rear portion of the wrench body). The rear portion of the second end 23b' is provided with a stop 23b1' of circular truncated cone shape. The rear end face of the second end 23b' is provided with a circular recess 23b2'.

As shown in Fig. 7A and Fig. 8, the fixed part 24' fits around a portion at the front of the stop 23b1' of the second end 23b' of the torque transfer part 23' in a movable manner along the length direction. The fixed part 24' has a tube 24a' and a cover 24b'. The inner diameter of the tube 24a' is larger than the outer diameter of the second end 23b'. The tube 24a' fits around the second end 23b' of the torque transfer part 23' in a movable manner along the length direction. The stop 23b1' restricts the movement of the tube 24a' to the rear side to a predetermined distance. The tube 24a has a distal portion, a rear portion, and a middle portion between the distal portion and the rear portion. The outer peripheral surface of the distal portion of the tube 24a is threaded. The thread of the tube 24a' is screwed to the thread in the inner peripheral surface of the rear portion of the housing hole 22a' of the handle 22'. The cover 24b' is a disc provided in the middle portion of the tube 24a'. The cover 24b' has a larger outer diameter than the handle 22' of the wrench body. With the tube 24a' screwed to the rear portion of the housing hole 22a' of the handle 22', the cover 24b' covers the rear side of the housing hole 22a' of the handle 22'.

As shown in Fig. 7A and Fig. 8, the coil spring 25' fits around the distal portion of the second end 23b' of the torque transfer part 23' in a movable manner along the length direction and interposed in the compressed state between the fixed part 24' and the middle portion 23c' of the torque transfer part 23'. The coil spring 25' is accommodated , together with the torque transfer part 23', in the housing hole 22a' of the handle 22', and it biases the torque transfer part 23' to the distal side (to the head 21' side). The middle portion 23c' of the torque transfer part 23' corresponds to a second abut-stop and the fixed part 24' corresponds to a third abut-stop in the claims.

As shown in Fig. 7A and Fig. 8, the load cell 30' is provided rearwardly of the wrench body and in contact with the second end 23b' of the torque transfer part 23'. The load cell 30' includes a load cell part 31', a power/output cable 32', and a body 33'. The body 33' is tuboid and its distal portion is provided with the load cell part 31'. An end of the power/output cable 32' is inserted into the body 33' and connected to the load cell part 31'. The outer peripheral surface of the distal portion of the body 33' is threaded. The thread is screwed to the thread in the inner peripheral surface of the sleeve 41', thereby attaching the body 33' to the sleeve 41'. Consequently, the load cell 30' is fixed rearwardly of the wrench body.

The load cell part 31' is a compressive load cell of disc shape. The load cell part 31' includes a loading part 31a' and a protective wall 31 b'. The loading part 31a' is a circular convex load button provided at the center of a top surface of the load cell part 31'. The outer diameter of the loading part 31a' is slightly smaller than the inner diameter of the recess 23b2' of the torque transfer part 23'. The height of the loading part 31a' is larger than the depth of the recess 23b2' of the torque transfer part 23'. With the body 33' attached to the sleeve 41', the loading part 31a' fits into the recess 23b2' of the torque transfer part 23' and is in contact with the second end 23b' of the torque transfer part 23'. When the loading part 31a' receives a load from the second end 23b' of the torque transfer part 23', the load cell part 31' can convert the load into an electrical signal and output the converted electrical signal to the slip detection device D through the power/output cable 32'.

The protective wall 31b' is a tuboid wall provided around the loading part 31 a' on the top surface of the load cell part 31'. The protective wall 31b' has a larger height than the loading part 31a'. Accordingly, the protective wall 31b' prevents the loading part 31a' from contacting other members (working table, etc.) in a state where the body 33' of the load cell 30' is removed from the sleeve 41'. In this removed state, the loading part 31 a' is unlikely to take an unnecessary load.

As shown in Fig. 7A and Fig. 8, the sleeve 41' is a tuboid body fitting around the handle 22' of the wrench body in a movable manner along the length direction. A disc-shaped flange 41 a' is provided at a lengthwise end of the sleeve 41'. The inner diameter of the flange 41a' is larger than the outer diameter of the handle 22' and smaller than the outer diameter of the cover 24b' of the fixed part 24'. The inner diameter of the sleeve 41' excluding the flange 41a' is slightly larger than the outer diameter of the cover 24b' and substantially the same as the outer diameter of the distal portion of the body 33' of the load cell 30'. The inner peripheral surface of the other lengthwise end of the sleeve 41' is threaded. The thread of the body 33' of the load cell 30' is screwed to the thread of the sleeve 41', thereby attaching the sleeve 41' to the body 33' of the load cell 30' In this state, the sleeve 41' accommodates the rear portion of the second end 23b' of the torque transfer part 23', the rear portion of the fixed part 24', the cover 24b' of the fixed part 24', and the load cell part 31' of the load cell 30', maintaining the second end 23b' of the torque transfer part 23' in contact with the loading part 31 a' of the load cell part 31'.

The coil spring 42' fits around the handle 22' of the wrench body in a movable manner along the length direction and is accommodated in the sleeve 41'. The coil spring 42' is interposed in a compressed state between the flange 41 a' of the sleeve 41' and the cover 24b' of the fixed part 24' and biases the cover 24b' to the rear side. Thus arrangement makes it possible to press the second end 23b' of the torque transfer part 23' onto the load cell part 31' (that is, the load cell part 31' is preloaded).

The following details a procedure of how to assemble torque wrench W' of the tightening apparatus configured as described. First, the wrench body and the sleeve 41' are prepared. The handle 22' of the wrench body is inserted into the sleeve 41'. After that, the coil spring 42' is prepared. The handle 22' of the wrench body is inserted into the coil spring 42'. The coil spring 42' is accordingly received in the sleeve 41', and one lengthwise end of the coil spring 42' abuts the flange 41a' of the sleeve 41'.

Also prepared are the second end 23b' of the torque transfer part 23', the fixed part 24', and the coil spring 25'. The second end 23b' is inserted into the fixed part 24' and the coil spring 25', bringing the fixed part 24' into contact with the stop 23b1' of the second end 23b'. After that, the first end 23a' and the middle portion 23c' of the torque transfer part 23' are prepared. The thread of the second end 23b' is screwed to the threaded hole of the middle portion 23c'. As a result, the coil spring 25' is compressed between the middle portion 23c' and the fixed part 24'.

After that, the torque transfer part 23', the coil spring 25', and the distal portion of the fixed part 24' are inserted into the housing hole 22a' of the wrench body, and the fixed part 24' is screwed to the rear portion of the housing hole 22a' of the wrench body. Then, the cover 24b' of the fixed part 24' covers the rear side of the housing hole 22a' of the wrench body. As the cover 24b' has a larger outer diameter than the handle 22' of the wrench body, the outer edge (first abut-stop) of the cover 24b' protrudes from the handle 22' in the outer circumferential direction. The cover 24b in this state may be in contact with the other lengthwise end of the coil spring 42'. After that, the torque transfer part 23' is rotated inside the housing hole 22a' of the wrench body to fit the first and second protrusions of the housing hole 22a' into the first and second cut portions 23c1' of the torque transfer part 23'. As a result, the pawl 23a1' of the first end 23a' of the torque transfer part 23' protrudes from the housing hole 22a' of the handle 22' into the attachment hole 21a' of the head 21', the abut-stop surface 23a11' of the pawl 23a1' faces in the circumferential direction α, and the inclined surface 23a12' faces in the circumferential direction β. The wrench main unit 20 is assembled in this manner.

After that, the load cell 30' is prepared. The loading part 31 a' of the load cell 30' is positioned and inserted into the recess 23b2' of the second end 23b' of the torque transfer part 23'. In this state, the sleeve 41' and the coil spring 42' are moved relatively to the rear side with respect to the wrench body, thereby screwing the sleeve 41' to the distal portion of the body 33' of the load cell 30'. This causes compression of the coil spring 42' between the flange 41a' of the sleeve 41' and the outer edge of the cover 24b' of the fixed part 24' to bias of the cover 24b' to the rear side. As a result, the second end 23b' of the torque transfer part 23' is pressed onto the load cell part 31', and the load cell part 31' is preloaded.

After that, the attachable portion 12' of the tightening part 10' is fitted into the attachment hole 21a' of the head 21'. Then, the pawl 23a1' of the torque transfer part 23' is inserted into and engaged with one of the ratchet grooves 121' of the attachable portion 12' of the tightening part 10'. After that, the power/output cable 32' of the load cell 30' is connected to the slip detection device D.

The following describes how to use and operate the tightening apparatus configured as described above, with reference to Fig. 4 for explanatory convenience. It should be noted that it is assumed also in the second embodiment for convenience of description that the tightening operation needs to be performed three times to screw the abutment 1 to the fixture 2.

First, when the doctor operates the setting input part 70 to turn on power, a power voltage is supplied to the microprocessor unit 50 etc. to activate the slip detection device D, and the power voltage is also supplied to the load cell 30' through the power/output cable 32' to activate the load cell 30'. The microprocessor unit 50 then starts processing of the slip determination program. After that, when the doctor operates the setting input part 70 to input a personal information item or items of a particular patient (s1), the microprocessor unit 50 retrieves from the memory 60 one of the torque reference values corresponding to the personal information item(s) and stores the value in the internal memory.

After that, the doctor engages the abutment 1 with the tightening part 10' of the torque wrench W', engages the abutment 1 in this state with the fixture 2, and applies the manual force R to the handle 22' of the torque wrench W' to start the tightening operation. This makes the wrench main unit 20' of the torque wrench W' rotate about the rotational axis P in the circumferential direction α. Simultaneously, the abut-stop surface 23a11' of the pawl 23a1' of the torque transfer part 23' is in contact with the first wall 122a' of a ratchet groove 121' of the tightening part 10' (that is, rotation in the circumferential direction P is restricted), so that the tightening part 10' rotates in the circumferential direction α together with the wrench main unit 20' and the abutment 1. This causes tightening of the abutment 1 with respect to the fixture 2, gradually increasing the resistance force against the tightening force. The resistance forces generated against the tightening force R in tightening the abutment 1 produce moment (torque) Q to rotate the tightening part 10 along the head 21'. Simultaneously, the abut-stop surface 23a11' of the pawl 23a1' of the torque transfer part 23' is pressed onto the first wall 122a' of the ratchet groove 121' of the tightening part 10', and the second end 23b' of the torque transfer part 23' applies a load on the loading part 31a' of the load cell 30'. The load cell 30' converts the load into an electrical signal, the amplifier A amplifies the electrical signal, and the A/D converter C converts the amplified signal from analog to digital form. When the microprocessor unit 50 receives the A/D converted electrical signals (s2), it makes predetermined operations based on the electrical signal and the tightening torque reference value to compute tightening torques (s3), records the tightening torques on the memory 60, and outputs the real values and the peak value of the tightening torques to the 7-segment display unit 92 and the tightening torques to the LCD unit 91, respectively. The real and peak values of the tightening torques are thus displayed numerically on the 7-segment display unit 92 (s4, s5), and the changes of the tightening torques are displayed graphically as torque curves on the LCD unit 91 (s6).

After that, a force is applied to the handle 22' of the torque wrench W' in the opposite direction to the manual force R. Then, the wrench main unit 20' of the torque wrench W' rotates about the rotational axis P in the circumferential direction β. Simultaneously, the second wall 122b' of the engaged ratchet groove 121' of the tightening part 10' presses the inclined surface 23a12' of the pawl 23al'. This moves the wrench body to the distal side against the biasing forces of the coil spring 42' and the coil spring 25', and the pawl 23a1' is disengaged from the ratchet grooves 121'. The coil spring 42' is compressed between the flange 41a' of the sleeve 41' and the cover 24b' of the fixed part 24', and the coil spring 25' is compressed between the fixed part 24' and the middle portion 23c' of the torque transfer part 23'. After that, when the pawl 23a1' is inserted into the next ratchet grooves 121', the biasing forces of the coil spring 42' and the coil spring 25' moves the wrench body the rear side. These steps are repeated (that is, pawl 23a1' of the torque transfer part 23' enters and leaves one after another of the ratchet groove 121' of the tightening part 10'), thereby allowing the tightening part 10' and the abutment 1 to rotate with respect to the head 21 in the circumferential direction α. The above-described tightening operation is performed three times.

In this tightening operation, the microprocessor unit 50 performs slip detection (s7) as in the first embodiment. Upon detecting a slip, the microprocessor unit 50 executes procedures s8 to s13 as in the first embodiment.

The above-described tightening apparatus can achieve the same effects as those in the first embodiment. Moreover, the first end 23a' of the rod-like torque transfer part 23' engages with the ratchet grooves 121' of the tightening part 10', and the second end 23b' of the torque transfer part 23' is in contact with the load cell 30'. Accordingly, the load (rotating torque) applied to the tightening part 10' in the tightening operation is transmitted to the load cell 30' through the torque transfer part 23', and the load cell 30' converts the load into an electrical signal and outputs the converted electrical signal. Based on the electrical signal, the microprocessor unit 50 (torque computer 51) computes the tightening torque, and the real values and the peak value of the tightening torques are displayed numerically on the 7-segment display unit 92, and changes in the tightening torque are displayed graphically as a torque curve on the LCD unit 91. This configuration makes it possible to perform the tightening operation appropriately by referring to the real values of the tightening torques, the peak value of the tightening torques, and the changes in the tightening torque.

Further, the convex loading part 31 a' of the load cell 30' is received in the recess 23b2' in the second end 23b' of the torque transfer part 23', and it is in contact with the second end 23b'. It is therefore possible to improve the accuracy of the load applied on the tightening part 10' through the torque transfer part 23', thereby improving the accuracy of detecting the tightening torques of the tightening part 10'.

Also, as the load cell 30' is fixed rearwardly of the wrench body via the sleeve 41', the wrench body can be minimized in size. This should facilitate tightening operations with the wrench body placed in the mouth of a patient.

The tightening apparatuses are not limited to those according to the first and second embodiments, and they may be modified in design within the scope of claims as detailed below.

In the first embodiment, the torque wrench W includes the tightening part 10, the wrench main unit 20, and the load cell 30 (torque detector). In the second embodiment, the torque wrench W' includes the tightening part 10', the wrench main unit 20', the load cell 30' (torque detector), sleeve 41', and the coil spring 42' (first biasing part). However, the torque wrench can be modified as long as it includes a tightening part, a wrench body including a head, and a tightening torque detector for detecting tightening torques of the tightening part. That is, it is possible to omit constituents other than the tightening part, the wrench body, and the torque detector of the torque wrench.

The tightening part of the first and second embodiments is removable and rotatable with respect to the head, but the invention is not limited thereto. For example, the tightening part may be integrated with the head. The tightening part may be rotatably provided at the head. It is described in the first and second embodiments that there is one tightening part provided removably from the head, but plural types of tightening parts, corresponding to plural types of abutments, may be attached to and removed from the head. In this case, the tightening apparatus can provide tightening operations of abutments of plural types merely by exchaniging the tightening parts according to the abutments.

In the second embodiment, the torque transfer part 23' is a rod that includes the first end 23a', which is engaged with the ratchet grooves 121' of the tightening part 10', and the second end 23b', which is in contact with the load cell 30', and the torque transfer part 23' is longer than the housing hole 22a' of the wrench body. However, the torque transfer part may be modified as long as it a first end and a second end on the opposite side of the first end, the first end being provided inside the wrench body and engaged with the tightening part. The torque transfer part may be of rod shape or any other shape. The torque transfer part may be of smaller length than the housing hole of the wrench body. In other words, the entire torque transfer part may be accommodated in the housing hole of the wrench body.

In the second embodiment, the pawl 23a1' at the first end 23a' of the torque transfer part 23' includes the abut-stop surface 23a11' and the inclined surface 23a12'. However, the invention is not limited thereto. For example, the first walls 122a' of the ratchet grooves 121' may each be provided with an abut-stop surface, and the second walls 122b' may each be provided with an inclined surface. In this case, the pawl may not be a triangular protrusion but may be a rectangular protrusion, for example. Rotation of the tightening part 10' in the circumferential direction β may be restricted by bringing the abut-stop surface of a first wall 122a' into contact with the pawl. In the tightening operation, the abut-stop surface of a first wall 122a' presses the pawl so as to transmit the rotating torque of the tightening part to the torque transfer part 23'. The inclined surface of a second wall 122b' is pressed onto the pawl so as to move the wrench body to the distal side. The pawl is accordingly disengaged from the ratchet groove 121', allowing rotation of the tightening part 10' with respect to the head 21' in the second direction opposite to the first direction. It is also possible to omit the abut-stop surfaces and inclined surfaces described above and only provide a pawl and ratchet grooves to be engages with the pawl. It is required to provide at least one ratchet groove in the outer peripheral surface of the tightening part. The torque transfer part may be integrated with the loading part of the load cell.

In the second embodiment, the load cell 30' is fixed rearwardly of the wrench body by the sleeve 41'. However, the mechanism for attaching the load cell to the wrench body may be modified in design. For example, in the above-mentioned case where the entire torque transfer part is accommodated in the housing hole of the wrench body, the load cell 30' may be modified to be accommodated in the housing hole of the wrench body. The load cell may also be modified to be fixed to the rear portion of the wrench body. In any of these cases, the sleeve 41 and/or the coil spring 42 may be omitted.

In the second embodiment, the convex loading part 31 a' of the load cell 30' is received in the recess 23b2' of the second end 23b' of the torque transfer part 23' and abuts the second end 23b'. However, the invention is not limited thereto. For example, the load cell may have a concave loading part, in which case the second end of the torque transfer part may be provided with a protrusion to be received in the loading part. The height of such protrusion is larger than the depth of the loading part. This case can also improve the accuracy of the load applied to the tightening part through torque transfer part by bringing the protrusion on the second end into contact with the concave loading part of the load cell.

In the second embodiment, the load cell 30' has the protective wall 31b'. The protective wall 31b' may be omitted. There may be provided with a plurality of protective walls around the convex loading part of the load cell.

In the first embodiment, the coil spring 42' is interposed in the compressed state between the flange 41 a' of the sleeve 41' and the cover 24b' of the fixed part 24'. However, the first biasing part such as the coil spring 42' may be modified as long as it is provided between the sleeve and the first abut-stop provided in the wrench body. For example, the first biasing part may be modified to be interposed between the first abut-stop, such as a ring provided along the outer peripheral surface of the wrench body, and the sleeve.

In the second embodiment, the coil spring 25' is interposed in the compressed state between the fixed part 24' and the middle portion 23c' of the torque transfer part 23'. However, the coil spring 25' can be omitted. It is possible to bias the second end 23b' onto the load cell 30' even in this case because the coil spring 42' biases the cover 24b' of the fixed part 24' rearward to bring the fixed part 24' into contact with the stop 23b1' of the second end 23b' of the torque transfer part 23'. The biasing force of the coil spring 42' protrudes the pawl 23al' of the first end 23a' of the torque transfer part 23' from the housing hole 22a' of the handle 22' into the attachment hole 21a' of the head 21'. The coil spring 25' and the coil spring 42' may be replaced with other well-known biasing means such as rubber tubes and plate springs.

The torque detector of the invention is not limited to the load cell as described above. For example, it may be configured as an elastic body and a strain gauge for detecting tightening torques of the tightening part, or as a piezoelectric device for detecting tightening torques of the tightening part as pressures, or as a magnetic sensor for detecting tightening torques using the Hall effect.

In the first and second embodiments, the microprocessor unit 50 sounds the buzzer 93 when the latter amount of change is smaller than the former amount of change, but the invention is not limited thereto. For example, the microprocessor unit 50 may be modified to include an internal counter to count the number of determinations whether or not the latter amount of change is smaller than the former amount of change, and to activate the indicator such as the buzzer 93 when the counter has counted a predetermined number (three times in the first embodiment). In this case, the doctor does not need to ascertain authenticity of alerts given by the indicator every time at the end of tightening operation. Therefore, this modification improves the tightening apparatus in terms of convenience.

In the first and second embodiments, the microprocessor unit 50 samples the amount of change of tightening torques in every predetermined period t (t1 to tn) and sequentially compares the amount of change of tightening torques in a prior predetermined period t with that in the subsequent predetermined period t to determine whether or not the latter amount of change is smaller than the former amount of change. However, the invention is not limited thereto. For example, the microprocessor unit 50 may be modified to sample the rate of change of tightening torques in every predetermined period t (t1 to tn) and sequentially compare the rate of change (rate of increase) of tightening torques in a prior predetermined period t with the rate of change (rate of increase) of tightening torques in the subsequent predetermined period t to determine whether or not the latter rate of change is smaller than the former rate of change. Alternatively, the microprocessor unit 50 may be modified to sample the amount or rate of change of tightening torques in every predetermined time t, and determines whether or not the amount of change (increase) or the rate of change (rate of increase) of tightening torque values in the predetermined time t falls within a predetermined range. In this case, the indicator such as the buzzer 93 may be modified to inform that the abutment is tightened on the fixture to the verge of occurrence of a slip phenomenon when the microprocessor unit 50 determines that the amount or rate of change of tightening torque values in a predetermined time t falls within the predetermined range (for example, the amount of change of tightening torques falls within the predetermined range in periods t5, t10 and t 14 shown in Fig. 5). In this case, the indicator may be modified to operate when it is determined a predetermined number of times that the amount or rate of change of tightening torque values in a predetermined time t falls within a predetermined range. Predetermined range values of the amount or rate of change of tightening torques may be prestored in internal memory of the microprocessor unit 50 or in the memory 60.

In the tightening apparatuses described above, the microprocessor unit 50 executes the slip determination program to perform the functions as the torque computer 51 and the slip determiner 52. However, the same functions can be performed by means of electronic circuitry without using the microprocessor unit. Further, electronic circuitry in place of the microprocessor unit may also determine whether or not the amount of change of tightening torque values in a predetermined time t falls within a predetermined range as described above. The tightening apparatus may include the torque wrench and the torque computer. Alternatively, the tightening apparatus may include the torque wrench, the torque computer 51, and a display device capable of displaying tightening torques computed by the torque computer 51. That is, the slip determiner 52 can be omitted.

The torque computer 51 as described above is configured to retrieve from the memory 60 one of the torque reference values corresponding to a personal information item or items of a patient and compute tightening torques based on the tightening torque reference value and output signals from the load cell serving as the torque detector. However, the torque computer may be modified in any manner as long as it is adapted to compute tightening torques of the tightening part based on output signals from the torque detector. The torque computer may include a microprocessor or an electronic circuit.

The indicator in the first and second embodiments is the buzzer 93, but the invention is not limited thereto. For example, in place of the indicator, a doctor may determines a detection of a slip by referring to a torque curve displayed on the LCD unit 91 (functioning as a display device). Alternatively, the indicator may be the LCD unit 91 (functioning as a display device) adapted to display an error, or the 7-segment display unit 93 (functioning as a display device) adapted to display numerals or flash to indicate an error when the microprocessor unit 50 determines that the latter amount or rate of change is smaller than the former amount or rate of change or that the amount or rate of change of tightening torque values in a predetermined time t falls within a predetermined range. Alternatively, the indicator may be a light-emitting device such as an LED lamp. Further alternatively, the indicator may be any combination selected from a buzzer, a light-emitting device, a graphical display device, and a numerical display device. The display device is not limited to the LCD unit 91 and the 7-segment display unit 93 and may be any other display device adapted to display tightening torques computed by the torque computer.

It should be appreciated that the materials, shapes, sizes, and arrangements constituting the respective components of the tightening apparatuses described according to the first and second embodiments have been described by way of example only and may be modified in any manner if they can perform the same functions. Also, the torque wrench and the slip detection device may be separately provided as in the first and second embodiments. However, the torque wrench and the slip detection device may be integrated with each other. Further, the torque wrench and the torque computer may be integrated with each other. The tightening apparatus may be used for any other applications than dental implant treatments.

### Reference Signs List

1: abutment
2: fixture
W: torque wrench
10: tightening part
   11: engaging portion
   12: attachable portion
20: wrench main unit
   21: head
   22: handle
   23: rod
   24: fixed part
   25: coil spring
30: load cell (torque detector)
   31: load button
   32: power/output cable
D: slip detection device
   A: amplifier
   C: A/D converter
   50: microprocessor unit
      51: torque computer
      52: slip determiner
   60: memory
   70: setting input part (input part)
   80: external output part
   91: LCD unit
   92: 7-segment display unit
   93: buzzer (indicator)
10': tightening part
   11': engaging portion
   12': attachable portion
20': wrench main unit
   21': head
   22': handle
   23': torque transfer part
      23a': first end
         23a1': pawl
            23a11': abut-stop surface
            23a12': inclined surface
      23b': second end
         23b1': stopper
         23b2': recess
      23c': middle portion (second abut-stop)
   24': fixed part (third abut-stop)
   25': coil spring (second biasing part)
30': load cell (torque detector)
   31': load cell part
      31a': loading part
   32': power/output cable
   33': body
41': sleeve
42': coil spring (first biasing part)

## Claims

1. A tightening apparatus for a dental implant, the dental implant including a fixture and an abutment to be screwed to the fixture, the tightening apparatus comprising:
a torque wrench; and
a slip detection device, wherein
the torque wrench includes:
a tightening part engageable with the abutment;
a wrench body, the wrench body including a head, provided with the tightening part, and a manually-operable handle; and
a tightening torque detector for detecting tightening torques generated when the abutment is screwed to the fixture, and
the slip detection device includes:
a slip determiner adapted to sample an amount or rate of change of the tightening torques detected by the torque detector in every predetermined time t, to sequentially compare the amount or rate of change of the tightening torques in a prior predetermined period t with that in a subsequent predetermined period t that is immediately after the prior predetermined period t, and to determine whether or not the latter amount or rate is smaller than the former amount or rate; and
an indicator adapted to indicate that the abutment is tightened on the fixture on the verge of a slip phenomenon when the slip determiner determines that the latter amount or rate of change is smaller than the former amount or rate of change.

2. The tightening apparatus for a dental implant according to claim 1, wherein the slip detection device further includes:
an input part adapted to input thereto an inherent information item of a particular patient;
a memory adapted to store therein a plurality of tightening torque reference values corresponding to inherent information items of patients;
a torque computer adapted to retrieve from the memory one of the tightening torque reference values corresponding to the inherent information item of the particular patient, the information item being inputted through the input part, and to compute the tightening torques based on the corresponding tightening torque reference value and an output signal from the torque detector.

3. The tightening apparatus for a dental implant according to claim 1 or 2, wherein
the indicator is configured to indicate that the abutment is tightened on the fixture on the verge of a slip phenomenon when the slip determiner determines a predetermined number of times that said latter amount or rate of change is smaller than said former amount or rate of change.

4. The tightening apparatus for a dental implant according to any one of claims 1 to 3, wherein
the torque detector comprises a load cell adapted to convert a load, which is applied to the tightening part when the abutment is screwed to the fixture, into an electrical signal and to output the converted electrical signal.

5. The tightening apparatus for a dental implant according to any one of claims 1 to 4, wherein
the indicator comprises a display device adapted to perform at least one of graphical display and numerical display,
the graphical display displays a torque curve representing a change of the tightening torques detected by the torque detector, and
the numerical display numerically displays the tightening torques detected by the torque detector.

6. The tightening apparatus for a dental implant according to any one of claims 1 to 4, wherein the indicator comprises at least one of a buzzer and a light-emitting device.

7. The tightening apparatus for a dental implant according to any one of claims 1 to 6, wherein the tightening part is attachable to and removable from the head of the wrench body.

8. A tightening apparatus for a dental implant, the dental implant including a fixture and an abutment to be screwed to the fixture, the tightening apparatus comprising:
a torque wrench; and
a slip detection device, wherein
the torque wrench includes:
a tightening part engageable with the abutment;
a wrench body, the wrench body including a head, provided with the tightening part, and a manually-operable handle; and
a tightening torque detector for detecting tightening torques generated when the abutment is screwed to the fixture, and
the slip detection device includes:
a slip determiner adapted to sample an amount or rate of change of tightening torques detected by the torque detector in every predetermined time t, to determine whether or not the amount or rate of change of tightening torques in the predetermined time t falls within a predetermined range; and
an indicator adapted to indicate that the abutment is tightened on the fixture on the verge of a slip phenomenon when the slip determiner determines that the amount or rate of change in the predetermined time t falls within the predetermined range.

9. The tightening apparatus for a dental implant according to claim 1 or 8, wherein
the torque wrench further includes a torque transfer part including a first end and a second end on the opposite side of the first end, the first end being provided inside the wrench body and engaged with the tightening part, and
the torque detector comprises a load cell abutting the second end of the torque transfer part, the load cell being adapted to receive a load applied to the tightening part through the torque transfer part, to convert the load into an electrical signal, and to output the converted electrical signal.

10. The tightening apparatus for a dental implant according to claim 9, wherein the load cell includes a convex loading part,
the second end of the torque transfer part is provided with a recess to receive the loading part of the load cell, and
a height of the loading part is larger than a depth of the recess.

11. The tightening apparatus for a dental implant according to claim 9, wherein the load cell includes a concave loading part,
the second end of the torque transfer part is provided with a protrusion to be received in the loading part of the load cell, and
a height of the protrusion is larger than a depth of the loading part.

12. The tightening apparatus for a dental implant according to any one of claims 9 to 11, wherein
the wrench body includes a distal portion and a rear portion, the distal portion including the head,
the second end of the torque transfer part protrudes from the rear portion of the wrench body, and
the load cell is disposed rearwardly of the wrench body and abuts the second end.

13. The tightening apparatus for a dental implant according to any one of claims 9 to 12, wherein
the tightening part includes an outer peripheral surface provided with a ratchet groove, and
the torque transfer part further includes a pawl provided at the first end thereof, the pawl being engageable with the ratchet groove.

14. The tightening apparatus for a dental implant according to claim 13, wherein the torque wrench further includes:
a sleeve attached to the load cell to fit around the wrench body in a movable manner along the length direction; and
a first biasing part provided between a first abut-stop of the wrench
body and the sleeve,
the tightening part is rotatable with respect to the head,
the torque transfer part is accommodated in the wrench body in a movable manner along the length direction,
the ratchet groove includes first and second walls, and
the pawl includes:
an abut-stop surface adapted to abut the first wall and restrict rotation of the tightening part in a first direction; and
an inclined surface adapted to press the second wall to move the wrench body to a distal side thereof.

15. The tightening apparatus for a dental implant according to claim 13, wherein the first abut-stop provided in the wrench body further includes:
a sleeve fitting around the wrench body in a movable manner along the length direction, the sleeve being attached to the load cell; and
a first biasing part provided between a first abut-stop provided in the wrench body and the sleeve,
the tightening part is rotatable with respect to the head,
the torque transfer part is stored in the wrench body in a movable manner along the length direction,
the ratchet groove has first and second walls,
the first wall includes an abut-stop surface abutting the pawl for restricting rotation of the tightening part in a first direction, and
the second wall includes an inclined surface to be pressed by the pawl to move the wrench body to a distal side thereof.

16. The tightening apparatus for a dental implant according to any one of claims 14 to 15, wherein
the torque transfer part further includes a second abut-stop, and
the torque wrench further includes:
a third abut-stop; and
a second biasing part provided between the second and third abut-stops.

17. The tightening apparatus for a dental implant according to claim 10, wherein
the load cell further includes a protective wall standing around the loading part, the protective wall having a larger height than the loading part.

18. The tightening apparatus for a dental implant according to any one of claims 9 to 17, wherein
the slip detection device further includes a torque computer for computing the tightening torque of the tightening part based on an output signal from the load cell of the torque wrench.
